# EUROPEAN PATENT APPLICATION

(11) **EP 4 589 998 A1**
(43) Date of publication of application: **23.07.2025**
(21) Application number: 23870991.9
(22) Date of filing: 28.09.2023
(51) Int. Cl.: H04W 4/44

(54) **COMMUNICATION METHOD AND APPARATUS, AND VEHICLE**

(30) Priority: 30.09.2022 CN 202211230585
(71) Applicant: Shenzhen Yinwang Intelligent Technologies Co., Ltd., Shenzhen, Guangdong 518129 (CN)
(72) Inventor: LV, Sen, Shenzhen, Guangdong 518129 (CN); YANG, Haiquan, Shenzhen, Guangdong 518129 (CN); FAN, Yuwei, Shenzhen, Guangdong 518129 (CN)
(74) Representative: Thun, Clemens
(86) International application number: PCT/CN2023/122418
(87) International publication number: WO 2024/067766

(57) **Abstract**

Embodiments of this application provide a communication method. The method includes: receiving a connection broadcast that is based on identification information, where the identification information is determined based on vehicle recognition information; and establishing a connection to a charging apparatus based on the connection broadcast that is based on the identification information. According to the foregoing method, a problem that a vehicle does not adapt to the charging apparatus can be avoided, and charging experience of a user can be improved.

## Description

This application claims priority to Chinese Patent Application No. 202211230585.7, filed with the China National Intellectual Property Administration on September 30, 2022 and entitled "COMMUNICATION METHOD, APPARATUS, AND VEHICLE", which is incorporated herein by reference in its entirety.

### TECHNICAL FIELD

Embodiments of this application relate to the field of intelligent vehicles, and more specifically, to a communication method, an apparatus, and a vehicle.

### BACKGROUND

New energy vehicles such as electric vehicles and plug-in hybrid electric vehicles are increasingly favored by users. For such a vehicle that needs to be charged, to ensure a traveling range of the vehicle, the vehicle needs to be frequently charged during use. Currently, in a charging process of a vehicle, the vehicle is parked in front of a charging apparatus, and a user holds a charging connector and inserts the charging connector into a charging port of the vehicle for charging.

However, in the foregoing charging process, the vehicle and the charging apparatus may not adapt to each other, resulting in a charging failure or poor user experience. For example, if the vehicle driven by the user is of a vehicle model for which the charging apparatus does not support charging, charging fails. For another example, the user wants to perform fast charging on the vehicle, but a found charging apparatus does not support a fast charging function. Therefore, how to avoid that a vehicle does not adapt to a charging apparatus and improve charging experience of a user is a problem to be urgently resolved.

### SUMMARY

Embodiments of this application provide a communication method, an apparatus, and a vehicle, to avoid a problem that a vehicle does not adapt to a charging apparatus, and improve charging experience of a user.

According to a first aspect, a communication method is provided. The method includes: receiving a connection broadcast that is based on identification information, where the identification information is determined based on vehicle recognition information; and establishing a connection to a charging apparatus based on the connection broadcast that is based on the identification information.

The charging apparatus may include a charging pile and a charging connector, and the identification information may be a unique vehicle ID identifier derived according to a specific rule based on the vehicle recognition information (for example, a vehicle identification number (vehicle identification number, VIN) or other information that can indicate an identity of a vehicle). The connection broadcast that is based on the identification information may be a unique connection broadcast. After receiving the broadcast, the vehicle can be connected to the corresponding charging apparatus. The connection may be a Bluetooth connection, or may be another connection.

In embodiments of this application, the vehicle can receive the connection broadcast that is based on the identification information, and can be connected to the corresponding charging apparatus based on the connection broadcast that is based on the identification information, to perform charging. In this manner, a problem that the vehicle does not adapt to the charging apparatus can be avoided, and charging experience of a user can be improved.

With reference to the first aspect, in some implementations of the first aspect, before the receiving a connection broadcast that is based on identification information, the method further includes: receiving a first message sent by the charging apparatus, where the first message indicates a type of the charging apparatus and/or a service provided by the charging apparatus; determining the identification information based on the first message and the vehicle recognition information; and sending the identification information to the charging apparatus.

A field in the first message may be used to identify the type of the charging apparatus, and after learning of the type of the charging apparatus, the vehicle can generate unique identification information with reference to the vehicle recognition information; and/or the field in the first message may be used to identify the service provided by the charging apparatus, and after receiving the service provided by the charging apparatus, the vehicle can generate unique identification information with reference to the vehicle recognition information. This process may also be referred to as a process of negotiation between the vehicle and the charging pile.

In embodiments of this application, the vehicle can receive the first message sent by the charging apparatus, and generate the identification information based on content of the first message with reference to the vehicle recognition information, so that the vehicle can be connected to the charging apparatus when the vehicle receives the connection broadcast that is based on the identification information. In this manner, the process of the negotiation between the vehicle and the charging pile is added. Therefore, on the basis that adaptation between the charging apparatus and the vehicle is ensured, security of using the identification information generated by the vehicle is higher.

With reference to the first aspect, in some implementations of the first aspect, the service provided by the charging apparatus includes one or more of the following: a capability of controlling opening or closing of a charging port cover, a charging speed, and a payment manner.

The capability of controlling opening or closing of the charging port cover may mean that when the charging connector of the charging apparatus approaches the vehicle, the vehicle can be triggered to open or close the charging port cover.

With reference to the first aspect, in some implementations of the first aspect, the method further includes: receiving a positioning message sent by the charging apparatus, where the positioning message indicates a position of the charging connector, and the charging apparatus includes the charging connector; and controlling, based on the positioning message, the charging port cover of the vehicle to be opened.

After establishing the connection to the charging apparatus, the vehicle can receive the positioning message sent by the charging apparatus, and the positioning message indicates the position of the charging connector.

Optionally, the charging connector may directly send the positioning message to the vehicle, to notify the vehicle of the position of the charging connector.

Optionally, the charging connector may send the positioning message to the charging pile, and then the charging pile sends the positioning message to the vehicle, to notify the vehicle of the position of the charging connector.

In embodiments of this application, after the charging apparatus is connected to the vehicle, the charging apparatus can send the positioning message of the charging connector to the vehicle, so that the vehicle can control, based on the positioning message, automatic popping up of the charging port cover. In this manner, in an entire process, the user does not need to manually open or close the charging port cover. This improves the charging experience of the user, and can also ensure that the charging port cover is safely opened.

With reference to the first aspect, in some implementations of the first aspect, the controlling, based on the positioning message, the charging port cover of the vehicle to be opened includes: determining a distance between the vehicle and the charging connector based on the positioning message; and controlling, when the distance is less than or equal to a first threshold, the charging port cover to be opened.

For example, when the distance between the charging connector and the vehicle is less than 1 meter, the charging port cover of the vehicle is controlled to be opened.

Optionally, the distance between the vehicle and the charging connector may be a distance between the charging port cover and the charging connector.

In embodiments of this application, the vehicle can determine the distance between the charging connector and the vehicle based on the positioning message of the charging connector. The vehicle can control the charging port cover to be opened only when the distance is less than the first threshold. In this manner, the charging port cover of the vehicle can be automatically opened only when both of the following conditions are met: The identification information is successfully verified and the distance between the charging connector and the vehicle is less than the first threshold. This further ensures charging safety of the user.

With reference to the first aspect, in some implementations of the first aspect, the controlling, when the distance is less than or equal to a first threshold, the charging port cover to be opened includes: when duration in which the distance is less than or equal to the first threshold is greater than or equal to first duration, controlling the charging port cover to be opened.

For example, when duration in which the distance between the charging connector and the vehicle is less than 1 meter is greater than or equal to 1 minute, the charging port cover is controlled to pop up.

In a scenario in which one charging connector can trigger opening of charging port covers of two vehicles at the same time, when a vehicle owner holds the charging connector to charge a first vehicle, the vehicle owner may pass a second vehicle. In this case, if a distance between the charging connector and the second vehicle is less than the first threshold, a charging port cover of the second vehicle is opened (actually, this situation is expected to be avoided). In embodiments of this application, a condition for opening a charging port cover is further set, so that the charging connector can be prevented from mistakenly triggering a charging port cover of a non-charged vehicle to be opened.

With reference to the first aspect, in some implementations of the first aspect, the method further includes: when it is not detected, within second duration, that the charging connector is inserted into a charging port, controlling the charging port cover to be closed.

For example, after the charging port cover of the vehicle is opened, if the vehicle does not detect, within 3 minutes, that the charging connector is inserted into the charging port, the vehicle may control the charging port cover to be automatically closed.

In embodiments of this application, when the charging connector mistakenly triggers the charging port of the vehicle to be opened, and an action of inserting the charging connector by the user is not detected within the second duration, the charging port cover is automatically closed. In this manner, after the charging port cover is mistakenly triggered, because a condition for automatically closing a charging port cover is set, the charging safety of the user can be further ensured.

With reference to the first aspect, in some implementations of the first aspect, the receiving a connection broadcast that is based on identification information includes: when a distance between the vehicle and the charging apparatus is less than or equal to a preset distance, receiving the connection broadcast that is based on the identification information.

For example, when the distance between the vehicle and the charging apparatus is less than or equal to 20 meters, the vehicle may receive the connection broadcast that is based on the identification information.

According to a second aspect, a communication method is provided. The method includes: receiving a second message sent by a cloud server, where the second message indicates that the cloud server successfully verifies identification information, and the identification information is determined based on vehicle recognition information; and sending a connection broadcast that is based on the identification information.

Optionally, a charging apparatus may verify an identification information, and send a connection broadcast that is based on the identification information when the identification information is successfully verified.

In embodiments of this application, after receiving the message indicating that the cloud server successfully verifies the identification information, the charging apparatus can send the connection broadcast that is based on the identification information, so that a vehicle establishes a connection to the charging apparatus.

With reference to the second aspect, in some implementations of the second aspect, before the receiving a second message sent by a cloud server, the method further includes: sending a first message to the vehicle, where the first message indicates a type of the charging apparatus and/or a service provided by the charging apparatus; receiving the identification information sent by the vehicle; and sending the identification information to the cloud server.

After receiving the identification information, the charging apparatus may forward the identification information to the cloud server. The cloud server compares the identification information with identification information preset in the server. If the identification information is consistent with the identification information preset in the server, the identification information is successfully verified, and then the cloud server notifies the charging apparatus of information indicating that the verification succeeds. After learning that the identification information is successfully verified, the charging apparatus may send the connection broadcast that is based on the identification information to the vehicle.

Optionally, the identification information may carry a certificate and a key. After receiving the identification information, the charging apparatus may forward the identification information to the cloud server. The cloud server may verify the certificate and the key in the identification information. If the verification succeeds, the cloud server notifies the charging apparatus of information indicating that the verification succeeds. After learning that the identification information is successfully verified, the charging apparatus may send the connection broadcast that is based on the identification information to the vehicle.

Optionally, the identification information may alternatively carry user information and an identification validity period. After receiving the identification information, the charging apparatus may forward the identification information to the cloud server. The cloud server may verify the validity period and the user information. If the verification succeeds, the cloud server notifies the charging apparatus of information indicating that the verification succeeds. After learning that the identification information is successfully verified, the charging apparatus may send the connection broadcast that is based on the identification information to the vehicle.

In embodiments of this application, the charging apparatus can receive the identification information sent by the vehicle, and send the identification information to the cloud server for verification, to establish the connection to the vehicle when the identification information is successfully verified.

With reference to the second aspect, in some implementations of the second aspect, the service provided by the charging apparatus includes one or more of the following: a capability of controlling opening or closing of a charging port cover, a charging speed, and a payment manner.

According to a third aspect, a communication apparatus is provided. The apparatus includes: a transceiver unit, configured to receive a connection broadcast that is based on identification information, where the identification information is determined based on vehicle recognition information; and a processing unit, configured to establish a connection to a charging apparatus based on the connection broadcast that is based on the identification information.

With reference to the third aspect, in some implementations of the third aspect, the transceiver unit is further configured to receive a first message sent by the charging apparatus, where the first message indicates a type of the charging apparatus and/or a service provided by the charging apparatus; the processing unit is further configured to determine the identification information based on the first message and the vehicle recognition information; and the transceiver unit is further configured to send the identification information to the charging apparatus.

With reference to the third aspect, in some implementations of the third aspect, the service provided by the charging apparatus includes one or more of the following: a capability of controlling opening or closing of a charging port cover, a charging speed, and a payment manner.

With reference to the third aspect, in some implementations of the third aspect, the transceiver unit is further configured to receive a positioning message sent by the charging apparatus, where the positioning message indicates a position of a charging connector, and the charging apparatus includes the charging connector; and the processing unit is further configured to control, based on the positioning message, the charging port cover of a vehicle to be opened.

With reference to the third aspect, in some implementations of the third aspect, the processing unit is specifically configured to: determine a distance between the vehicle and the charging connector based on the positioning message; and when the distance is less than or equal to a first threshold, control the charging port cover to be opened.

With reference to the third aspect, in some implementations of the third aspect, the processing unit is specifically configured to: when duration in which the distance is less than or equal to the first threshold is greater than or equal to first duration, control the charging port cover to be opened.

With reference to the third aspect, in some implementations of the third aspect, the processing unit is further configured to: when it is not detected, within second duration, that the charging connector is inserted into a charging port, control the charging port cover to be closed.

With reference to the third aspect, in some implementations of the third aspect, the transceiver unit is specifically configured to: when a distance between the vehicle and the charging apparatus is less than or equal to a preset distance, receive the connection broadcast that is based on the identification information.

According to a fourth aspect, a communication apparatus is provided. The apparatus includes a transceiver unit. The transceiver unit is configured to: receive a second message sent by a cloud server, where the second message indicates that the cloud server successfully verifies identification information, and the identification information is determined based on vehicle recognition information; and send a connection broadcast that is based on the identification information.

With reference to the fourth aspect, in some implementations of the fourth aspect, the transceiver unit is further configured to: send a first message to a vehicle, where the first message indicates a type of a charging apparatus and/or a service provided by the charging apparatus; receive the identification information sent by the vehicle; and send the identification information to the cloud server.

With reference to the fourth aspect, in some implementations of the fourth aspect, the service provided by the charging apparatus includes one or more of the following: a capability of controlling opening or closing of a charging port cover, a charging speed, and a payment manner.

According to a fifth aspect, a communication apparatus is provided. The apparatus includes at least one processor and a memory. The at least one processor is coupled to the memory, and is configured to read and execute instructions in the memory. The apparatus is configured to perform the methods according to the foregoing aspects.

According to a sixth aspect, a computer-readable medium is provided. The computer-readable medium stores program code, and when the computer program code is run on a computer, the computer is enabled to perform the methods according to the foregoing aspects.

According to a seventh aspect, a chip is provided. The chip includes at least one processor and a memory. The at least one processor is coupled to the memory, and is configured to read and execute instructions in the memory. An apparatus is configured to perform the methods according to the foregoing aspects.

According to an eighth aspect, a vehicle is provided. The vehicle includes at least one processor and a memory, and the vehicle includes the communication apparatus provided in any one of the implementations of the third aspect or the fourth aspect.

### BRIEF DESCRIPTION OF DRAWINGS

FIG. 1 is a functional block diagram of a vehicle according to an embodiment of this application;
FIG. 2 shows a system architecture to which a communication method is applicable according to an embodiment of this application;
FIG. 3 shows a communication method according to an embodiment of this application;
FIG. 4A to FIG. 4C show another communication method according to an embodiment of this application;
FIG. 5 is a diagram of an application scenario to which a communication method is applicable according to an embodiment of this application;
FIG. 6 is a diagram of another application scenario to which a communication method is applicable according to an embodiment of this application;
FIG. 7 is a diagram of still another application scenario to which a communication method is applicable according to an embodiment of this application;
FIG. 8 shows a communication apparatus according to an embodiment of this application; and
FIG. 9 shows another communication apparatus according to an embodiment of this application.

### DESCRIPTION OF EMBODIMENTS

The following describes technical solutions of this application with reference to accompanying drawings.

The following describes the technical solutions of embodiments in this application with reference to the accompanying drawings.

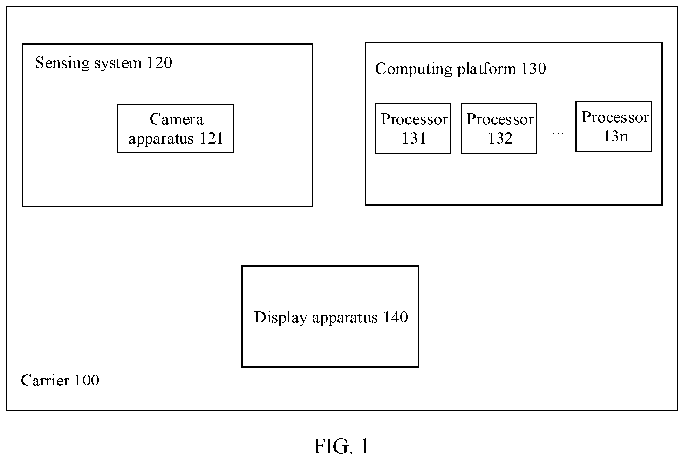

To facilitate understanding, a scenario to which embodiments of this application are applicable is described below with reference to FIG. 1 by using an intelligent driving scenario as an example.

FIG. 1 is a functional diagram of a carrier 100 according to an embodiment of this application. It should be understood that FIG. 1 and related descriptions are merely examples, and do not limit the carrier in embodiments of this application.

In an implementation process, the carrier 100 may be configured to be in a fully or partially automatic driving mode, or may be manually driven by a user. For example, the carrier 100 may obtain information about an ambient environment of the carrier by using a sensing system 120, and obtain an autonomous driving policy based on analysis of the information about the ambient environment to implement fully autonomous driving, or present an analysis result to the user to implement partially autonomous driving.

The carrier 100 may include a plurality of subsystems, such as the sensing system 120, a computing platform 130, and a display apparatus 140. Optionally, the carrier 100 may include more or fewer subsystems, and each subsystem may include one or more components. In addition, all subsystems and components of the carrier 100 may be interconnected in a wired or wireless manner.

The sensing system 120 may include several types of sensors that sense the information about the ambient environment of the carrier 100. For example, the sensing system 120 may include a positioning system. The positioning system may be a global positioning system (global positioning system, GPS), a BeiDou system, or another positioning system. The sensing system 120 may include one or more of the following: an inertial measurement unit (inertial measurement unit, IMU), a lidar, a millimeter-wave radar, an ultrasonic radar, and a camera apparatus 121.

The camera apparatus 121 may be configured to capture image information about the ambient environment of the carrier 100. The camera apparatus 121 may include a monocular camera, a binocular camera, a structured light camera, a panoramic camera, and the like, and the image information obtained by the camera apparatus 121 may include static image information, and may also include video stream information. The image information may be stored in a form of image or video, or may be stored in a form of image parameter or video parameter, for example, parameter information such as brightness, grayscale, color distribution, contrast, and pixel of an image.

Some or all of functions of the carrier 100 may be controlled by the computing platform 130. The computing platform 130 may include processors 131 to 13n (n is a positive integer). The processor is a circuit with a signal processing capability. In an implementation, the processor may be a circuit with an instruction reading and running capability, for example, a central processing unit (central processing unit, CPU), a microprocessor, a graphics processing unit (graphics processing unit, GPU) (which may be understood as a microprocessor), or a digital signal processor (digital signal processor, DSP). In another implementation, the processor may implement a specific function based on a logical relationship of a hardware circuit. The logical relationship of the hardware circuit is fixed or reconfigurable. For example, the processor is a hardware circuit implemented by an application-specific integrated circuit (application-specific integrated circuit, ASIC) or a programmable logic device (programmable logic device, PLD), for example, an FPGA. In the reconfigurable hardware circuit, a process in which the processor loads a configuration document to implement hardware circuit configuration may be understood as a process in which the processor loads instructions to implement functions of some or all of the foregoing units. In addition, the processor may alternatively be a hardware circuit designed for artificial intelligence, and may be understood as an ASIC, for example, a neural network processing unit (neural network processing unit, NPU), a tensor processing unit (tensor processing unit, TPU), or a deep learning processing unit (deep learning processing unit, DPU). In addition, the computing platform 130 may further include a memory. The memory is configured to store instructions. Some or all of the processors 131 to 13n may invoke the instructions in the memory to execute the instructions, to implement a corresponding function.

The computing platform 130 may control the functions of the carrier 100 based on inputs received from various subsystems (for example, the sensing system 120). In some embodiments, the computing platform 130 may operate to control many aspects of the carrier 100 and the subsystems of the vehicle.

Optionally, the foregoing components are merely examples. During actual application, the components in the foregoing modules may be added or removed according to an actual requirement. FIG. 1 should not be construed as a limitation on embodiments of this application.

The carrier 100 moving on a road may recognize an object in the ambient environment of the carrier 100 to determine an adjustment to a current speed. The object may be another vehicle, a traffic control device, or another type of object. In some examples, each recognized object may be considered independently, and a speed to be adjusted to by an autonomous vehicle may be determined based on features of the object, for example, a current speed and an acceleration of the object, and a spacing between the object and the vehicle.

Optionally, the carrier 100 or a sensing and computing device (for example, the computing platform 130) associated with the carrier 100 may predict a behavior of the recognized object based on features of the recognized object and a state (for example, traffic, rain, and ice on the road) of the ambient environment. Optionally, all recognized objects depend on a behavior of each other. Therefore, all the recognized objects may be considered together to predict a behavior of a single recognized object. The carrier 100 can adjust the speed of the carrier 100 based on the predicted behavior of the recognized object. In other words, the carrier 100 can determine, based on the predicted behavior of the object, a stable state (for example, acceleration, deceleration, or stop) to which the vehicle needs to be adjusted. In this process, another factor may also be considered to determine the speed of the carrier 100, for example, a lateral position of the carrier 100 on the road on which the carrier 100 travels, a curvature of the road, and proximity between a static object and a dynamic object.

The carrier 100 in this application may include a road transportation means, a water transportation means, an air transportation means, an industrial device, an agricultural device, an entertainment device, or the like. For example, the carrier may be a vehicle. The vehicle is a vehicle in a broad sense, and may be a transportation means (such as a commercial vehicle, a passenger vehicle, a motorcycle, a flight vehicle, or a train), an industrial vehicle (such as a pallet truck, a trailer, or a tractor), an engineering vehicle (such as an excavator, a bulldozer, or a crane), an agricultural device (such as a lawn mower or a harvester), a recreation device, a toy vehicle, or the like. A type of the vehicle is not specifically limited in embodiments of this application. For another example, the carrier may be a transportation means such as an aircraft or a ship.

The following uses an example in which the carrier is a vehicle to describe a technical problem that needs to be resolved in this application and the technical solutions used in this application.

New energy vehicles such as electric vehicles and plug-in hybrid electric vehicles are increasingly favored by users. For such a vehicle that needs to be charged, to ensure a traveling range of the vehicle, the vehicle needs to be frequently charged during use. Currently, in a charging process of a vehicle, the vehicle is parked in front of a charging apparatus, and a user holds a charging connector and inserts the charging connector into a charging port of the vehicle for charging.

However, in the foregoing charging process, the vehicle and the charging apparatus may not adapt to each other, resulting in a charging failure or poor user experience. For example, if the vehicle driven by the user is of a vehicle model for which the charging apparatus does not support charging, charging fails. For another example, the user wants to perform fast charging on the vehicle, but a found charging apparatus does not support a fast charging function. Therefore, how to avoid that a vehicle does not adapt to a charging apparatus and improve charging experience of a user is a problem to be urgently resolved.

Embodiments of this application provide a communication method, an apparatus, and a vehicle, to avoid a problem that a vehicle does not adapt to a charging apparatus, and improve charging experience of a user.

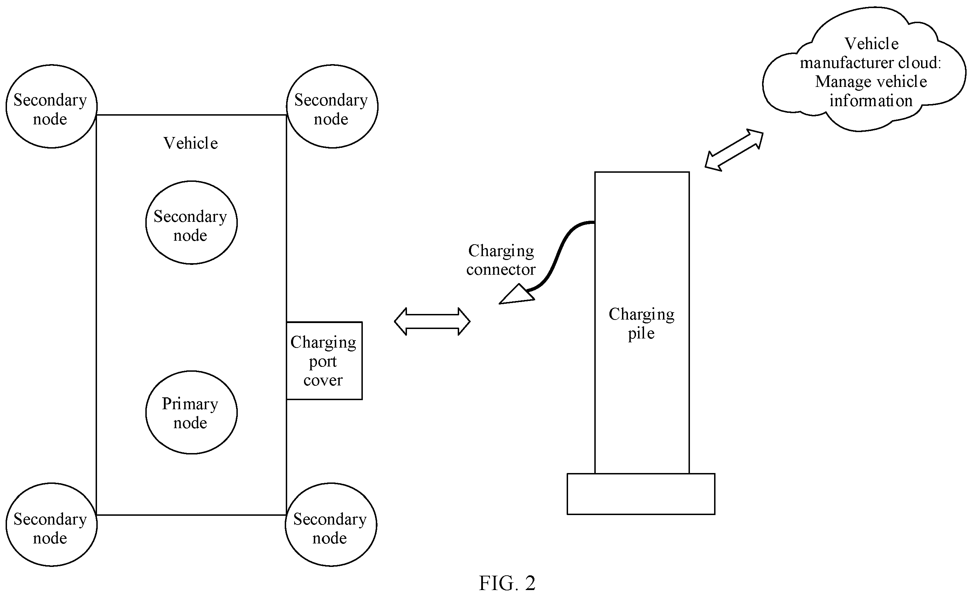

FIG. 2 shows a system architecture to which a communication method is applicable according to an embodiment of this application. The system architecture may be applied to the vehicle 100 in FIG. 1.

As shown in FIG. 2, the system architecture includes a vehicle, a charging pile, and a cloud server. The vehicle may have a wireless communication capability and an external device distance detection capability based on a wireless communication technology. An implementation of the wireless communication capability includes but is not limited to a Bluetooth technology, a carrier-free communication (ultra wide band, UWB) technology, a wireless fidelity (wireless fidelity, Wi-Fi) technology, a NearLink technology, and the like. An implementation of the distance detection capability includes but is not limited to Bluetooth low energy (Bluetooth low energy, BLE) positioning, UWB positioning, Wi-Fi fingerprint positioning, NearLink positioning, and the like. The vehicle may interact with an external device based on the foregoing wireless communication capability and distance detection capability.

The charging pile may have a wireless communication capability and a charging connector drawing recognition capability. An implementation of the wireless communication capability includes but is not limited to a Bluetooth technology, a UWB technology, a Wi-Fi technology, a NearLink technology, and the like. The charging pile may exchange information with the vehicle based on the wireless communication capability. In addition, the charging pile may further exchange information with the cloud server in a manner such as cellular communication or mobile phone grafting. The charging connector drawing recognition capability may mean that after detecting that a charging connector is drawn, the charging pile triggers a wireless communication capability (including but not limited to a BLE technology, a UWB technology, and a NearLink technology) of the charging connector. After the wireless communication capability is triggered, the charging connector may communicate with the vehicle end. In this application, the charging pile may also be referred to as a charging device.

The cloud server, also referred to as a vehicle manufacturer cloud, has capabilities of vehicle identifier security management, quick query for vehicle manufacturer information, quick payment, and the like.

It should be understood that the mobile phone grafting may mean that when the charging pile and the cloud server cannot be connected through a network but can be connected through Bluetooth, the charging pile may send information about the vehicle to a mobile phone through a Bluetooth connection, and then the mobile phone sends the information to the cloud server.

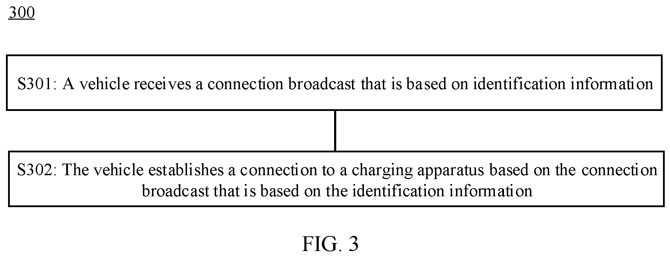

FIG. 3 shows a communication method according to an embodiment of this application. A method 300 may be applied to the carrier 100, and the method 300 may include the following steps.

S301: A vehicle receives a connection broadcast that is based on identification information.

The connection broadcast that is based on the identification information may be a unique connection broadcast. After receiving the broadcast, the vehicle can be connected to a corresponding charging apparatus. The connection may be a Bluetooth connection, or may be another connection.

Optionally, the identification information may be a unique vehicle ID identifier derived according to a specific rule based on vehicle recognition information (for example, a vehicle identification number VIN or other information that can indicate an identity of the vehicle).

Optionally, when a distance between the vehicle and the charging apparatus is less than or equal to a preset distance, the vehicle may receive the connection broadcast that is based on the identification information.

For example, when the distance between the vehicle and the charging apparatus is less than or equal to 20 meters, the vehicle may receive the connection broadcast that is based on the identification information.

S302: The vehicle establishes the connection to the charging apparatus based on the connection broadcast that is based on the identification information.

The charging apparatus may include a charging pile and a charging connector.

In embodiments of this application, the vehicle can receive the connection broadcast that is based on the identification information, and can be connected to the corresponding charging apparatus based on the connection broadcast that is based on the identification information, to perform charging. In this manner, a problem that the vehicle does not adapt to the charging apparatus can be avoided, and charging experience of a user can be improved.

In an embodiment, before step S301, the method further includes: The charging apparatus sends a first message to the vehicle, where the first message indicates a type of the charging apparatus and/or a service provided by the charging apparatus; the vehicle determines the identification information based on the first message and the vehicle recognition information; and the vehicle sends the identification information to the charging apparatus.

A field in the first message may be used to identify the type of the charging apparatus, and after learning of the type of the charging apparatus, the vehicle can generate unique identification information with reference to the vehicle recognition information; and/or the field in the first message may be used to identify the service provided by the charging apparatus, and after receiving the service provided by the charging apparatus, the vehicle can generate unique identification information with reference to the vehicle recognition information. This process may also be referred to as a process of negotiation between the vehicle and the charging pile.

Optionally, the service provided by the charging apparatus includes one or more of the following: a capability of controlling opening or closing of a charging port cover, a charging speed, and a payment manner. The capability of controlling opening or closing of the charging port cover may mean that when the charging connector of the charging apparatus approaches the vehicle, the vehicle can be triggered to open or close the charging port cover.

After receiving the identification information sent by the vehicle, the charging apparatus may verify the identification information, or may send the identification information to the cloud server for verification.

Optionally, after receiving the identification information, the charging apparatus may forward the identification information to the cloud server. The cloud server compares the identification information with identification information preset in the server. If the identification information is consistent with the identification information preset in the server, the identification information is successfully verified, and then the cloud server notifies the charging apparatus of information indicating that the verification succeeds. After learning that the identification information is successfully verified, the charging apparatus may send the connection broadcast that is based on the identification information to the vehicle.

Optionally, the identification information may carry a certificate and a key. After receiving the identification information, the charging apparatus may forward the identification information to the cloud server. The cloud server may verify the certificate and the key in the identification information. If the verification succeeds, the cloud server notifies the charging apparatus of information indicating that the verification succeeds. After learning that the identification information is successfully verified, the charging apparatus may send the connection broadcast that is based on the identification information to the vehicle.

Optionally, the identification information may alternatively carry user information and an identification validity period. After receiving the identification information, the charging apparatus may forward the identification information to the cloud server. The cloud server may verify the validity period and the user information. If the verification succeeds, the cloud server notifies the charging apparatus of information indicating that the verification succeeds. After learning that the identification information is successfully verified, the charging apparatus may send the connection broadcast that is based on the identification information to the vehicle.

In embodiments of this application, the vehicle can receive the first message sent by the charging apparatus, and generate the identification information based on content of the first message with reference to the vehicle recognition information, so that the vehicle can be connected to the charging apparatus when the vehicle receives the connection broadcast that is based on the identification information. In this manner, the process of the negotiation between the vehicle and the charging pile is added. Therefore, on the basis that adaptation between the charging apparatus and the vehicle is ensured, security of using the identification information generated by the vehicle is higher.

In an embodiment, after step S302, the method further includes: The vehicle receives a positioning message sent by the charging apparatus, where the positioning message indicates a position of the charging connector, and the charging apparatus includes the charging connector; and the vehicle controls, based on the positioning message, the charging port cover of the vehicle to be opened.

After establishing the connection to the charging apparatus, the vehicle can receive the positioning message sent by the charging apparatus, and the positioning message indicates the position of the charging connector.

Optionally, the charging connector may directly send the positioning message to the vehicle, to notify the vehicle of the position of the charging connector.

Optionally, the charging connector may send the positioning message to the charging pile, and then the charging pile sends the positioning message to the vehicle, to notify the vehicle of the position of the charging connector.

In embodiments of this application, after the charging apparatus is connected to the vehicle, the charging apparatus can send the positioning message of the charging connector to the vehicle, so that the vehicle can control, based on the positioning message, automatic popping up of the charging port cover. In this manner, in an entire process, the user does not need to manually open or close the charging port cover. This improves the charging experience of the user, and can also ensure that the charging port cover is safely opened.

In an embodiment, the vehicle can determine a distance between the vehicle and the charging connector, and when the distance is less than or equal to a first threshold, the vehicle controls the charging port cover of the vehicle to be opened.

For example, when the distance between the charging connector and the vehicle is less than 1 meter, the charging port cover of the vehicle is controlled to be opened.

Optionally, the distance between the vehicle and the charging connector may be a distance between the charging port cover and the charging connector.

In embodiments of this application, the vehicle can determine the distance between the charging connector and the vehicle based on the positioning message of the charging connector. The vehicle can control the charging port cover to be opened only when the distance is less than the first threshold. In this manner, the charging port cover of the vehicle can be automatically opened only when both of the following conditions are met: The identification information is successfully verified and the distance between the charging connector and the vehicle is less than the first threshold. This further ensures charging safety of the user.

In an embodiment, when determining that duration in which the distance between the vehicle and the charging connector is less than or equal to the first threshold is greater than or equal to first duration, the vehicle can control the charging port cover to be opened.

For example, when duration in which the distance between the charging connector and the vehicle is less than 1 meter is greater than or equal to 1 minute, the charging port cover is controlled to pop up.

In a scenario in which one charging connector can trigger opening of charging port covers of two vehicles at the same time, when a vehicle owner holds the charging connector to charge a first vehicle, the vehicle owner may pass a second vehicle. In this case, if a distance between the charging connector and the second vehicle is less than the first threshold, a charging port cover of the second vehicle is opened (actually, this situation is expected to be avoided). In embodiments of this application, a condition for opening a charging port cover is further set, so that the charging connector can be prevented from mistakenly triggering a charging port cover of a non-charged vehicle to be opened.

In an embodiment, when the vehicle does not detect, within second duration, that the charging connector is inserted into a charging port, the vehicle controls the charging port cover to be closed.

For example, after the charging port cover of the vehicle is opened, if the vehicle does not detect, within 3 minutes, that the charging connector is inserted into the charging port, the vehicle may control the charging port cover to be automatically closed.

In embodiments of this application, when the charging connector mistakenly triggers the charging port of the vehicle to be opened, and an action of inserting the charging connector by the user is not detected within the second duration, the charging port cover is automatically closed. In this manner, after the charging port cover is mistakenly triggered, because a condition for automatically closing a charging port cover is set, the charging safety of the user can be further ensured.

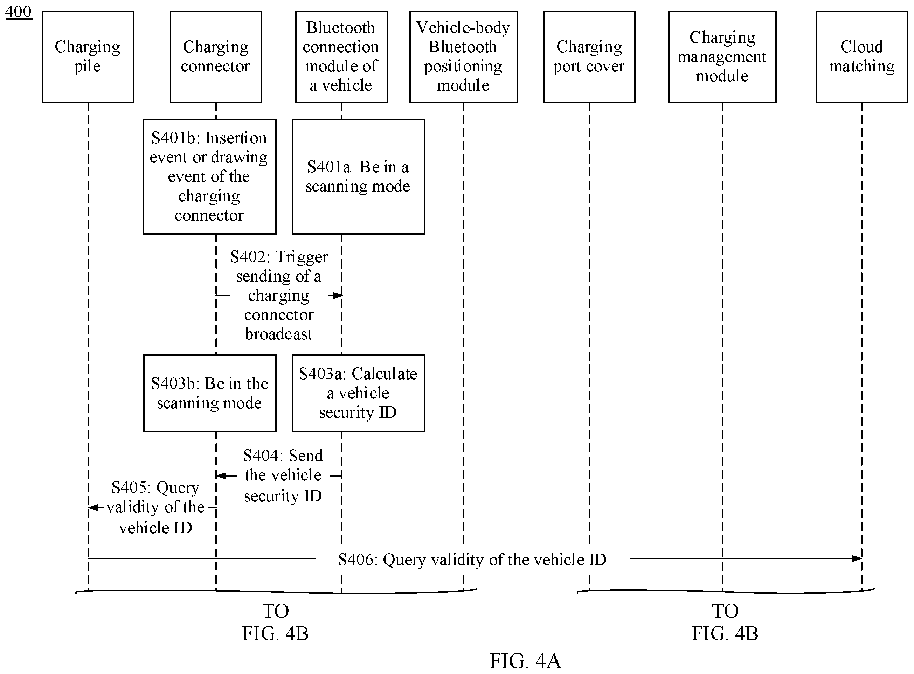

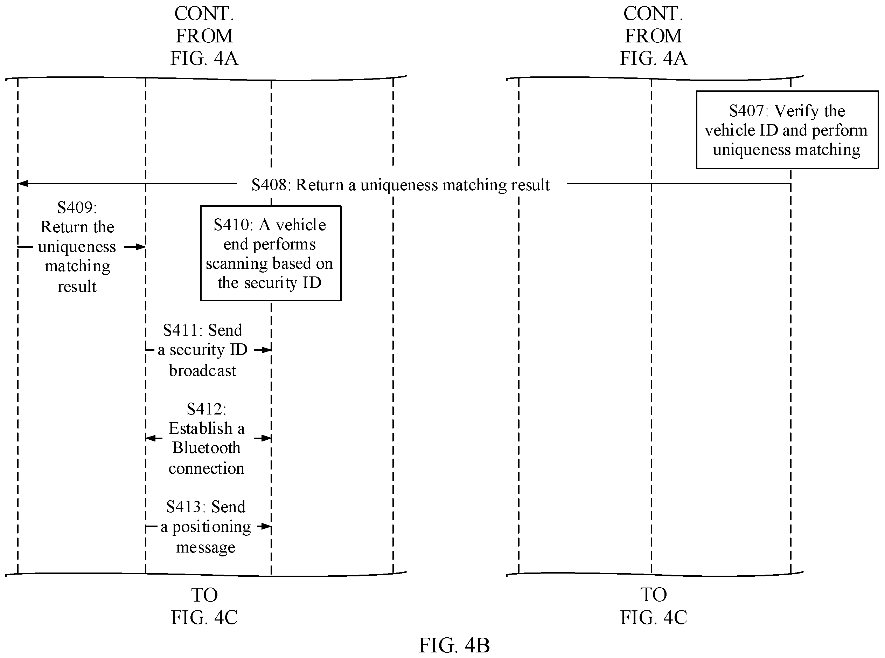

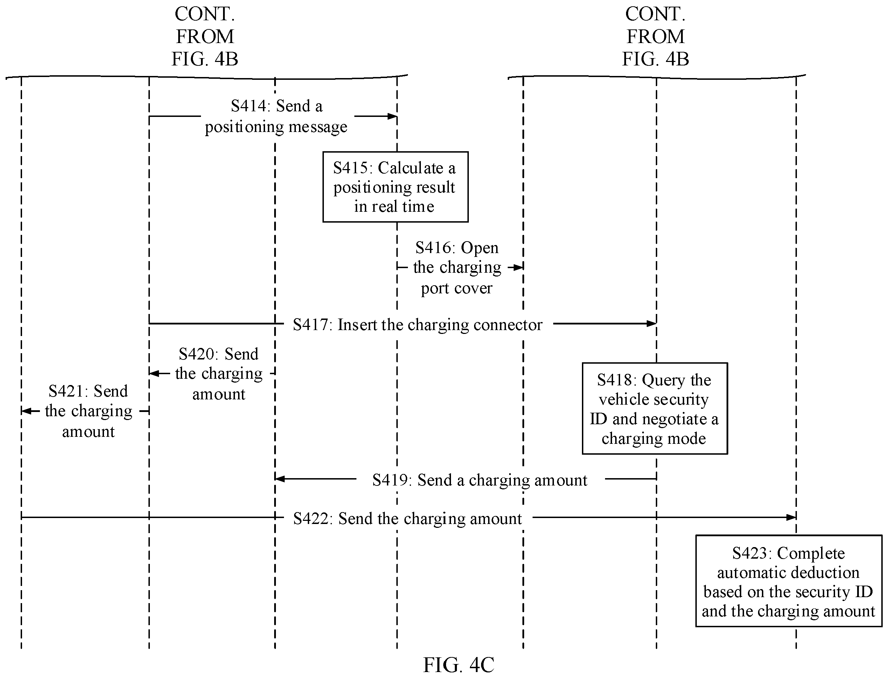

FIG. 4A to FIG. 4C show another communication method according to an embodiment of this application. A method 400 may be applied to the carrier 100, and the method 400 may include the following steps.

S401: A vehicle and a charging connector are in a scanning mode and a broadcast polling mode.

Specifically, this step may include the following two substeps.

S401a: A Bluetooth connection module of the vehicle is in the scanning mode. That a Bluetooth connection module of the vehicle is in the scanning mode may be understood as that the Bluetooth connection module of the vehicle waits to receive a broadcast sent by the charging connector.

S401b: The charging connector triggers an insertion event or a drawing event, that is, the charging connector is inserted into or drawn from a charging pile.

S402: The charging connector sends the broadcast to the Bluetooth connection module, to notify the vehicle that the charging connector triggers the insertion event or the drawing event. The broadcast may be a general-category broadcast of the charging connector, that is, most types of vehicles can receive the broadcast.

S403: The vehicle receives the broadcast and performs security verification.

Specifically, this step may include the following two substeps.

S403a: The Bluetooth connection module receives the category broadcast of the charging connector, and starts security ID calculation of the vehicle, where a vehicle security ID may be a VIN.

Optionally, the category broadcast of the charging connector may include specific information (for example, the first message in the method 300). A specific field in the message may be used to identify a type of the charging apparatus and a service that can be provided by the charging apparatus. After receiving the category broadcast, the vehicle may calculate the security ID based on the specific field and a vehicle identification number, to further ensure security of information exchange between the vehicle and the charging apparatus.

S403b: The charging connector is in the scanning mode. That the charging connector is in the scanning mode may be understood as that the charging connector waits to receive the vehicle security ID sent by the vehicle.

S404: The Bluetooth connection module sends the vehicle security ID to the charging connector.

S405: The charging connector sends the vehicle security ID to the charging pile.

S406: The charging pile queries validity of the vehicle security ID through cloud matching.

Specifically, after receiving the vehicle security ID, the charging pile may send the vehicle security ID to a cloud server through a network connection between the charging pile and the cloud server. In a scenario without a network connection, the charging pile may establish a Bluetooth connection to a terminal device such as a mobile phone, and send the vehicle security ID to the mobile phone through the Bluetooth connection, and the mobile phone uploads the vehicle security ID to a cloud server.

S407: The cloud server performs unique vehicle security ID matching according to a preset ID verification rule. If the vehicle security ID uniquely matches an ID preset in the cloud server, validity verification succeeds. If the vehicle security ID does not uniquely match an ID preset in the cloud server, the charging connector cannot establish a Bluetooth connection to the vehicle, and the method 400 ends.

Optionally, the cloud server may verify the vehicle security ID in several manners listed in the method 300.

S408: The cloud server returns a uniqueness matching result to the charging pile.

S409: The charging pile sends the uniqueness matching result to the charging connector.

S410: The vehicle-end Bluetooth connection module performs scanning based on the security ID. This step may be understood as that the vehicle-end Bluetooth connection module waits to receive a verification result for the vehicle security ID.

S411: The charging pile sends a vehicle security ID broadcast to the vehicle-end Bluetooth connection module. The security ID broadcast may be the connection broadcast that is based on the identification information in the method 300.

S412: The Bluetooth connection module of the vehicle establishes a Bluetooth connection to the charging pile.

S413: After the connection succeeds, the charging connector sends a positioning message to the Bluetooth connection module of the vehicle.

S414: The charging connector sends a positioning message to a vehicle-body Bluetooth positioning module, where the positioning message may be a Bluetooth positioning message or a UWB positioning message.

It should be understood that content of positioning messages in step S413 and step S414 may be the same, and both may indicate a position of the charging connector. The vehicle-end Bluetooth positioning module and the vehicle-body Bluetooth positioning module may calculate a distance between the charging connector and the vehicle based on the positioning messages.

S415: The vehicle-body Bluetooth positioning module calculates a positioning result in real time, and when the distance between the charging connector and the vehicle is less than a preset distance, a charging port cover automatically pops up. For example, the preset distance is set to 1 meter, and when the distance between the charging connector and the vehicle is less than 1 meter, the charging port cover automatically pops up.

Optionally, the distance between the charging connector and the vehicle may be a distance between the charging connector and the charging port cover of the vehicle.

S416: The vehicle-body Bluetooth positioning module sends a charging port cover opening command to the charging port cover.

S417: A charging management module detects that the charging connector is inserted into a charging port.

S418: The charging management module queries the vehicle security ID, and determines a charging mode.

Specifically, the charging management module may exchange information with the charging pile based on the vehicle security ID, to determine the charging mode (charging speed) of the charging pile. For example, if the charging management module determines, based on the vehicle security ID, that a model of the current vehicle supports fast charging, the charging management module may set a charging mode of the vehicle to a fast charging mode. For another example, if the charging management module determines, based on the vehicle security ID, that a model of the current vehicle does not support fast charging, the charging management module may set a charging mode of the vehicle to a normal mode.

S419: After detecting that charging is completed or the charging connector is drawn, the charging management module feeds back a charging amount to the Bluetooth connection module.

S420: The Bluetooth connection module sends feedback information to the charging connector, to feed back the charging amount of the vehicle.

S421: The charging connector sends feedback information to the charging pile, to feed back the charging amount of the vehicle.

S422: The charging pile sends indication information to the cloud server, to indicate the charging amount of the vehicle.

S423: Based on the charging amount and the vehicle security ID, the cloud server performs matching for information about a vehicle owner, and performs automatic deduction based on an account bound to the vehicle owner.

In embodiments of this application, when uniqueness verification of the vehicle security ID succeeds, a Bluetooth connection is established between the vehicle and the charging connector, and when the distance between the charging connector and the vehicle is less than the preset distance, the charging port cover is automatically opened. In this manner, a user can open or close the charging port cover without a manual operation in a vehicle charging process, thereby improving charging experience of the user and ensuring charging safety of the user.

If the method 400 is applied to a public charging scenario of a vehicle, a same charging connector may simultaneously trigger opening of charging port covers of two vehicles (that is, both vehicles pass uniqueness verification of a vehicle security ID). When the user picks up the charging connector and passes through a non-target vehicle, a fault tolerance mechanism may be considered to be added. To be specific, when positioning effective time meets a preset condition, a charging port cover is opened, or when an action of inserting the charging connector is not detected within preset time, the charging port cover may be automatically closed. For example, it may be set that when duration in which the distance between the charging connector and the vehicle is less than the preset distance (for example, 1 meter) is greater than or equal to preset duration (for example, 1 minute), the charging port cover of the vehicle is controlled to be opened. For another example, it may be set that when it is not detected, within preset duration (for example, 3 minutes), that the charging connector is inserted into the charging port, the charging port cover may be automatically closed.

In embodiments of this application, in the public charging scenario, a condition for opening or closing a charging port cover is further set, so that the charging connector can be prevented from mistakenly triggering the charging port cover to be opened, or the charging port cover can be closed in time after being mistakenly triggered. In this way, charging safety of the vehicle is ensured.

In some other scenarios, a low-configuration charging pile does not have a network connection function, but has a Bluetooth connection function. In this case,
information exchange between the charging pile and the cloud server may be completed by using a mobile phone. For example, the charging pile may send information about the vehicle to the mobile phone through a Bluetooth connection, and then the mobile phone sends the information to the cloud server. In addition, the cloud server may first send information to the mobile phone, and the mobile phone may send the information to the charging pile through a Bluetooth connection.

In embodiments of this application, in some low-configuration charging pile scenarios, the mobile phone can serve as a medium for information transmission between the charging pile and the cloud server, to complete steps such as vehicle security ID verification and charging billing.

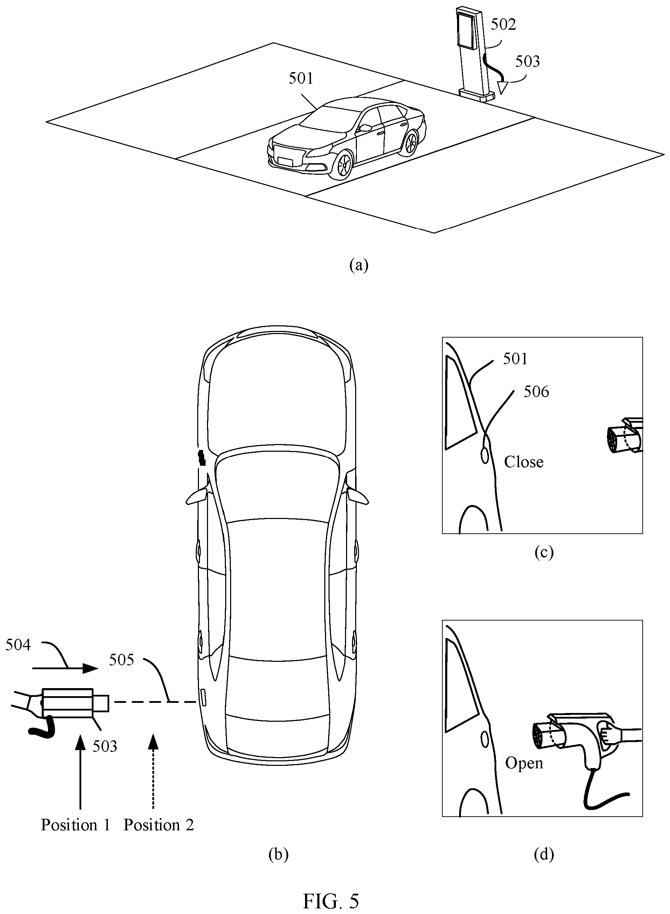

FIG. 5 is a diagram of an application scenario to which a communication method is applicable according to an embodiment of this application. The method 300 and the method 400 may be applied to this scenario.

As shown in (a) in FIG. 5, a vehicle 501 is located in a parking lot, a charging pile 502 is disposed near the vehicle, and a charging connector 503 is disposed on the charging pile 502. The vehicle 501 may communicate with the charging pile 502 and the charging connector 503 by using a wireless communication technology. In this case, if the vehicle 501 receives a charging connector broadcast sent by the charging connector 503, the vehicle 501 may send a vehicle security ID to the charging pile 502, and then the charging pile queries validity of the vehicle security ID by using a cloud server. When security verification of the vehicle security ID succeeds, the charging connector 503 may establish a Bluetooth connection to the vehicle 501, the charging connector 503 may send positioning information of the charging connector 503 to the vehicle 501, and the vehicle 501 may calculate a distance between the charging connector 503 and the vehicle 501 based on a positioning message of the charging connector 503.

As shown in (b) in FIG. 5, the vehicle can calculate a distance 505 between the charging connector 503 and the vehicle 501 in real time. When the charging connector 503 is located at a position 1, the distance 505 is greater than or equal to a preset distance (for example, 5 meters). In this case, as shown in (c) in FIG. 5, a charging port cover 506 is in a closed state. A user may hold the charging connector 503 to move in a direction 504. When a position of the charging connector 503 moves to a position 2, the distance 505 is less than a preset distance (for example, 5 meters). In this case, as shown in (d) in FIG. 5, the charging port cover 506 may automatically pop up.

In embodiments of this application, when security verification of the vehicle security ID succeeds, the Bluetooth connection is established between the vehicle and the charging connector, and when a distance between the charging connector and the charging port cover is less than a preset distance, the charging port cover is automatically opened. In this manner, the user can open or close the charging port cover without a manual operation in a vehicle charging process, thereby improving charging experience of the user.

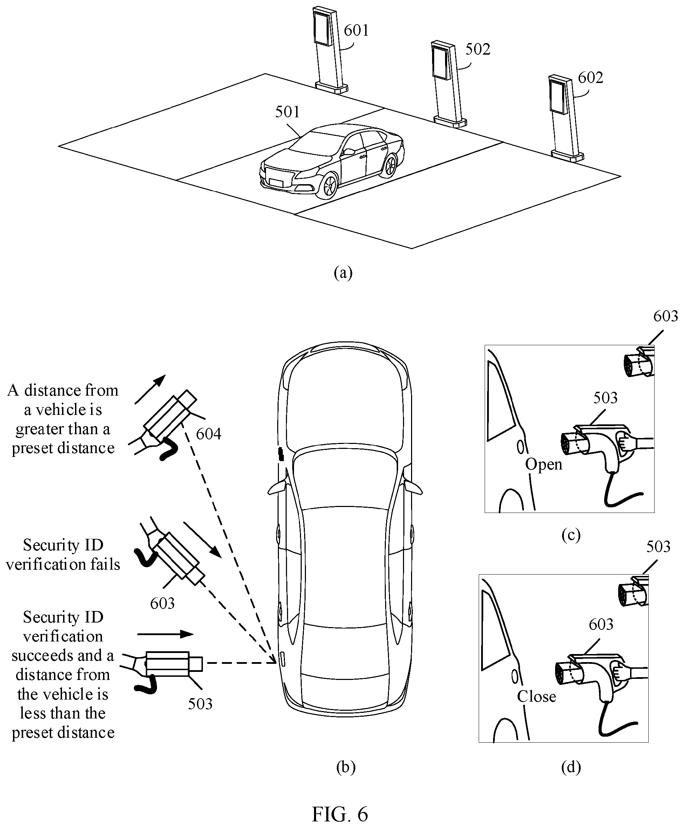

FIG. 6 is a diagram of another application scenario to which a communication method is applicable according to an embodiment of this application. The method 300 and the method 400 may be applied to this scenario.

As shown in (a) in FIG. 6, a vehicle 501 is located in a public parking lot. Compared with (a) in FIG. 5, a charging pile 601 and a charging pile 602 are additionally disposed in the public parking lot.

As shown in (b) in FIG. 6, a charging connector 603 is a charging connector corresponding to the charging pile 602, and a charging connector 604 is a charging connector corresponding to the charging pile 601. In the scenario shown in FIG. 6(b), both a charging connector 503 and the charging connector 604 establish a Bluetooth connection to the vehicle 501. Because security ID verification between the charging connector 603 and the vehicle 501 fails, the charging connector 603 does not establish a Bluetooth connection to the vehicle 501. In addition, a distance between the charging connector 503 and the vehicle 501 and a distance between the charging connector 603 and the vehicle 501 each are less than a preset distance (for example, 5 meters), but a distance between the charging connector 604 and the vehicle 501 is greater than the preset distance (for example, 5 meters). In this case, only the charging connector 503 can trigger a charging port cover to pop up.

As shown in (c) and (d) in FIG. 6, although the distance between the charging connector 503 and the vehicle and the distance between the charging connector 603 and the vehicle each are less than the preset distance, the charging port cover 506 is opened only when the charging connector 503 approaches the vehicle.

In embodiments of this application, only the charging connector that passes the vehicle security ID verification and whose distance from the vehicle meets a preset condition can trigger the charging port cover to pop up. In this manner, charging safety of a user is ensured, and charging experience of the user is improved.

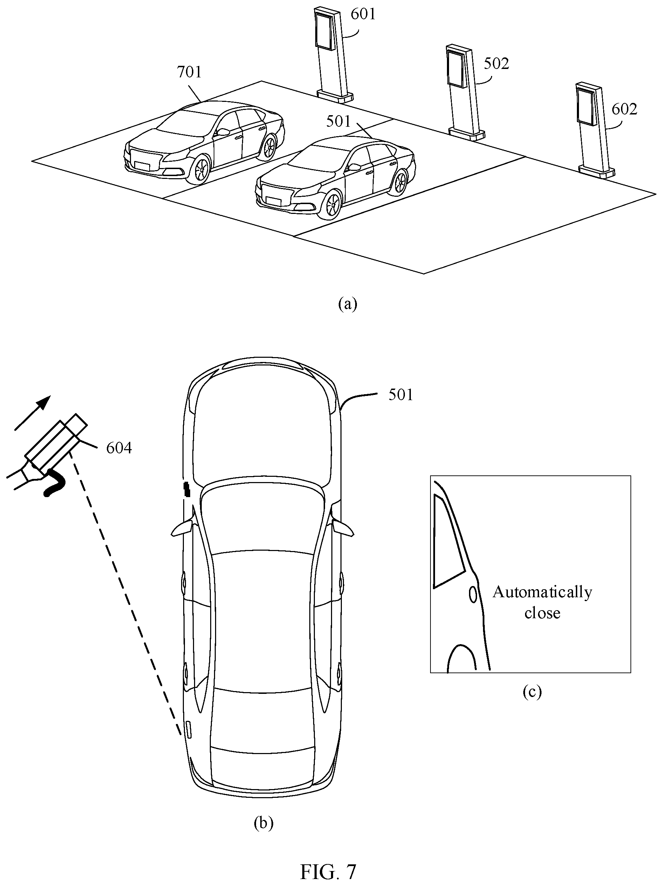

FIG. 7 is a diagram of still another application scenario to which a communication method is applicable according to an embodiment of this application. The method 300 and the method 400 may be applied to this scenario.

As shown in (a) in FIG. 7, a vehicle 501 is located in a public parking lot. Compared with (a) in FIG. 6, a vehicle 701 is additionally disposed in the public parking lot, and the vehicle 701 corresponds to a charging pile 601.

As shown in (b) in FIG. 7, a charging connector 604 is a charging connector corresponding to the charging pile 601, and is configured to charge the vehicle 701. However, in some cases, security IDs of the vehicle 501 and the vehicle 701 both pass uniqueness verification performed by a cloud server, and a distance between the charging connector 604 and the vehicle 501 and a distance between the charging connector 604 and the vehicle 701 each are less than a preset distance. In other words, the charging connector 604 can trigger a charging port cover of the vehicle 501 to automatically pop up, and can also trigger a charging port cover of the vehicle 701 to pop up. In this case, when a user holds the charging connector and passes a non-target vehicle (the vehicle 501), the charging connector 604 can trigger the charging port cover 506 of the vehicle 501 to be opened only when duration in which the distance between the charging connector 604 and the vehicle 501 is less than the preset distance (for example, 5 meters) is greater than or equal to preset duration (for example, 1 minute). Alternatively, if the vehicle 501 does not detect, within preset duration (for example, 3 minutes), that the charging connector 604 is inserted into the charging port cover 506, the vehicle may automatically close the charging port cover 506. That is, a case shown in (c) in FIG. 7 occurs.

In embodiments of this application, a condition for opening or closing a charging port cover is further set, so that the charging connector can be prevented from mistakenly triggering the charging port cover to be opened, or the charging port cover can be closed in a timely manner after being mistakenly triggered. In this manner, charging safety of the vehicle is ensured.

Embodiments of this application further provide an apparatus for implementing any one of the foregoing methods. For example, an apparatus including units (or means) configured to implement steps performed by the vehicle in any one of the foregoing methods is provided.

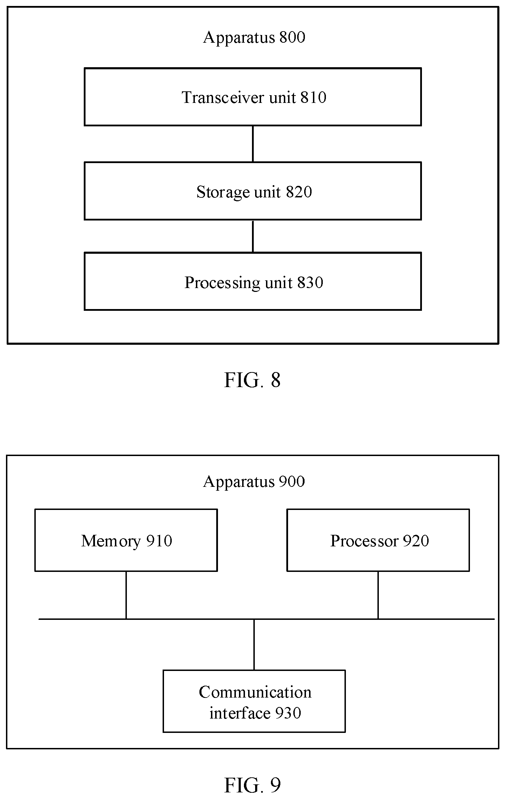

FIG. 8 is a diagram of a communication apparatus 800 according to an embodiment of this application. The apparatus 800 may include a transceiver unit 810, a storage unit 820, and a processing unit 830. The transceiver unit 810 may implement a corresponding function of receiving and sending instructions and/or data, and the transceiver unit 810 may also be referred to as a communication interface or a communication unit. The storage unit 820 is configured to implement a corresponding storage function, and store corresponding instructions and/or data. The processing unit 830 is configured to perform data processing. The processing unit 830 may read the instructions and/or the data in the storage unit 820, so that the apparatus 800 implements the foregoing method embodiments.

In a design, the apparatus 900 is configured to perform the action performed by the vehicle in the method 300 or the method 400.

In a possible implementation, the apparatus 800 includes: a transceiver unit 810, configured to receive a connection broadcast that is based on identification information, where the identification information is determined based on vehicle recognition information; and a processing unit 830, further configured to establish a connection to a charging apparatus based on the connection broadcast that is based on the identification information.

In a possible implementation, the transceiver unit 810 is further configured to receive a first message sent by the charging apparatus, where the first message indicates a type of the charging apparatus and/or a service provided by the charging apparatus. The processing unit 830 is further configured to determine the identification information based on the first message and the vehicle recognition information. The transceiver unit 810 is further configured to send the identification information to the charging apparatus.

In a possible implementation, the service provided by the charging apparatus includes one or more of the following: a capability of controlling opening or closing of a charging port cover, a charging speed, and a payment manner.

In a possible implementation, the transceiver unit 810 is further configured to receive a positioning message sent by the charging apparatus, where the positioning message indicates a position of a charging connector, and the charging apparatus includes the charging connector. The processing unit 830 is further configured to control, based on the positioning message, the charging port cover of a vehicle to be opened.

In a possible implementation, the processing unit 830 is specifically configured to: determine a distance between the vehicle and the charging connector based on the positioning message; and when the distance is less than or equal to a first threshold, control the charging port cover of the vehicle to be opened.

In a possible implementation, the processing unit 830 is specifically configured to: when duration in which the distance is less than or equal to the first threshold is greater than or equal to first duration, control the charging port cover to be opened.

In a possible implementation, the processing unit 830 is further configured to: when it is not detected, within second duration, that the charging connector is inserted into a charging port, control the charging port cover to be closed.

In a possible implementation, the transceiver unit 810 is specifically configured to: when a distance between the vehicle and the charging apparatus is less than or equal to a preset distance, receive the identification information based connection broadcast.

In a design, the apparatus 900 is configured to perform the action performed by the charging apparatus in the method 300 or the method 400.

In a possible implementation, the apparatus 800 includes a transceiver unit 810. The transceiver unit 810 is configured to: receive a second message sent by a cloud server, where the second message indicates that the cloud server successfully verifies identification information, and the identification information is determined based on vehicle recognition information; and send a connection broadcast that is based on the identification information.

In a possible implementation, the transceiver unit 810 is further configured to: send a first message to a vehicle, where the first message indicates a type of a charging apparatus and/or a service provided by the charging apparatus; receive the identification information sent by the vehicle; and send the identification information to the cloud server.

In a possible implementation, the service provided by the charging apparatus includes one or more of the following: a capability of controlling opening or closing of a charging port cover, a charging speed, and a payment manner.

It should be understood that division of units in the apparatus is merely logical function division. During actual implementation, all or some of the units may be integrated into one physical entity or may be physically separated. In addition, the unit in the apparatus may be implemented in a form of software invoked by a processor. For example, the apparatus includes a processor, the processor is connected to a memory, the memory stores instructions, and the processor invokes the instructions stored in the memory, to implement any one of the foregoing methods or functions of units in the apparatus. The processor is, for example, a general-purpose processor such as a graphics processing unit or a microprocessor, and the memory is a memory inside the apparatus or a memory outside the apparatus. Alternatively, the unit in the apparatus may be implemented in a form of hardware circuit, and the functions of some or all of the units may be implemented through a design of the hardware circuit. The hardware circuit may be understood as one or more processors. For example, in an implementation, the hardware circuit is an ASIC, and functions of some or all of the units are implemented through a design of a logical relationship between elements in the circuit. For another example, in another implementation, the hardware circuit may be implemented by using a PLD. An FPGA is used as an example. The FPGA may include a large quantity of logic gate circuits, and a connection relationship between the logic gate circuits is configured by using a configuration file, to implement the functions of some or all of the foregoing units. All of the units of the foregoing apparatus may be implemented in a form of software invoked by a processor, or may be implemented in a form of hardware circuit, or some of the units are implemented in a form of software invoked by a processor, and the remaining units are implemented in a form of hardware circuit.

Optionally, if the apparatus 800 is located in a vehicle, the processing unit 830 may be the processor 131 shown in FIG. 1.

Optionally, the processing unit 830 may be the processor 920 in FIG. 9, the storage unit may be the memory 910 in FIG. 9, and the transceiver unit 810 may be the communication interface 930 in FIG. 9.

FIG. 9 is a diagram of a structure of an apparatus 900 of another communication apparatus according to an embodiment of this application. The apparatus 900 may be applied to the carrier 100 in FIG. 1.

The apparatus 900 of the communication apparatus includes a memory 910, a processor 920, and a communication interface 930. The memory 910, the processor 920, and the communication interface 930 are connected through an internal connection path. The memory 910 is configured to store instructions, and the processor 920 is configured to execute the instructions stored in the memory 910, to control the input/output interface 930 to receive/send information. Optionally, the memory 910 may be coupled to the processor 920 through the interface, or may be integrated together with the processor 920.

It should be noted that the communication interface 930 uses a transceiver apparatus, for example, but not limited to, a transceiver. The communication interface 930 may further include the input/output interface (input/output interface).

The processor 920 stores one or more computer programs, and the one or more computer programs include instructions. When the instructions are run by the processor 920, the communication apparatus 900 is enabled to perform the communication method in the foregoing embodiments.

In an implementation process, steps in the foregoing methods may be implemented by using a hardware integrated logical circuit in the processor 920, or by using instructions in a form of software. The method disclosed with reference to embodiments of this application may be directly performed and completed by a hardware processor, or performed and completed by a combination of hardware and software modules in a processor. The software module may be located in a mature storage medium in the art, for example, a random access memory, a flash memory, a read-only memory, a programmable read-only memory, an electrically erasable programmable memory, or a register. The storage medium is located in the memory 910, and the processor 920 reads information in the memory 910 and completes the steps in the foregoing methods in combination with hardware of the processor 920. To avoid repetition, details are not described herein again.

Optionally, the apparatus 800 or the apparatus 900 may be located in the carrier 100 in FIG. 1.

Optionally, the apparatus 800 or the apparatus 900 may be the computing platform 130 in the carrier 100 in FIG. 1.

Embodiments of this application further provide a computer-readable medium. The computer-readable medium stores program code. When the computer program code is run on a computer, the computer is enabled to perform any one of the methods in FIG. 3 and FIG. 4A to FIG. 4C.

Embodiments of this application further provide a chip, including at least one processor and a memory. The at least one processor is coupled to the memory, and is configured to read and execute instructions in the memory, to perform any one of the methods in FIG. 3 and FIG. 4A to FIG. 4C.

Embodiments of this application further provide a communication apparatus, including at least one processor and a memory. The at least one processor is coupled to the memory, and is configured to read and execute instructions in the memory, to perform any one of the methods in FIG. 3 and FIG. 4A to FIG. 4C.

Embodiments of this application further provide a vehicle, including any communication apparatus in FIG. 8 and FIG. 9.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, reference may be made to a corresponding process in the foregoing method embodiments. Details are not described herein again.

In the several embodiments provided in this application, it should be understood that the disclosed system, apparatus and method may be implemented in other manners. For example, the described apparatus embodiments are merely examples. For example, division of the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between apparatuses or units may be implemented in electronic, mechanical, or another form.

The units described as separate parts may or may not be physically separate, and parts displayed as units may or may not be physical units, and may be located in one position, or may be distributed on a plurality of network units. Some or all of the units may be selected according to actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of software functional unit and sold or used as an independent product, the functions may be stored in a computer-readable storage medium. Based on such an understanding, the technical solutions of this application essentially, or a part contributing to the conventional technology, or some of the technical solutions may be implemented in a form of software product. The computer software product is stored in a storage medium and includes several instructions for instructing a computer device (which may be a personal computer, a server, a network device, or the like) to perform all or some of the steps of the methods in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
receiving a connection broadcast that is based on identification information, wherein the identification information is determined based on vehicle recognition information; and
establishing a connection to a charging apparatus based on the connection broadcast that is based on the identification information.

2. The method according to claim 1, wherein before the receiving a connection broadcast that is based on identification information, the method further comprises:
receiving a first message sent by the charging apparatus, wherein the first message indicates a type of the charging apparatus and/or a service provided by the charging apparatus;
determining the identification information based on the first message and the vehicle recognition information; and
sending the identification information to the charging apparatus.

3. The method according to claim 2, wherein the service provided by the charging apparatus comprises one or more of the following: a capability of controlling opening or closing of a charging port cover, a charging speed, and a payment manner.

4. The method according to any one of claims 1 to 3, wherein the method further comprises:
receiving a positioning message sent by the charging apparatus, wherein the positioning message indicates a position of a charging connector, and the charging apparatus comprises the charging connector; and
controlling, based on the positioning message, the charging port cover of a vehicle to be opened.

5. The method according to claim 4, wherein the controlling, based on the positioning message, the charging port cover of a vehicle to be opened comprises:
determining a distance between the vehicle and the charging connector based on the positioning message; and
controlling, when the distance is less than or equal to a first threshold, the charging port cover to be opened.

6. The method according to claim 5, wherein the controlling, when the distance is less than or equal to a first threshold, the charging port cover to be opened comprises:
when duration in which the distance is less than or equal to the first threshold is greater than or equal to first duration, controlling the charging port cover to be opened.

7. The method according to any one of claims 4 to 6, wherein the method further comprises:
when it is not detected, within second duration, that the charging connector is inserted into a charging port, controlling the charging port cover to be closed.

8. The method according to any one of claims 1 to 7, wherein the receiving a connection broadcast that is based on identification information comprises:
when a distance between the vehicle and the charging apparatus is less than or equal to a preset distance, receiving the connection broadcast that is based on the identification information.

9. A communication method, wherein the method comprises:
receiving a second message sent by a cloud server, wherein the second message indicates that the cloud server successfully verifies identification information, and the identification information is determined based on vehicle recognition information; and
sending a connection broadcast that is based on the identification information.

10. The method according to claim 9, wherein before the receiving a second message sent by a cloud server, the method further comprises:
sending a first message to the vehicle, wherein the first message indicates a type of the charging apparatus and/or a service provided by the charging apparatus;
receiving the identification information sent by the vehicle; and
sending the identification information to the cloud server.

11. The method according to claim 10, wherein the service provided by the charging apparatus comprises one or more of the following: a capability of controlling opening or closing of a charging port cover, a charging speed, and a payment manner.

12. A communication apparatus, wherein the apparatus comprises:
a transceiver unit, configured to receive a connection broadcast that is based on identification information, wherein the identification information is determined based on vehicle recognition information; and
a processing unit, configured to establish a connection to a charging apparatus based on the connection broadcast that is based on the identification information.

13. The apparatus according to claim 12, wherein
the transceiver unit is further configured to receive a first message sent by the charging apparatus, wherein the first message indicates a type of the charging apparatus and/or a service provided by the charging apparatus;
the processing unit is further configured to determine the identification information based on the first message and the vehicle recognition information; and
the transceiver unit is further configured to send the identification information to the charging apparatus.

14. The apparatus according to claim 13, wherein
the service provided by the charging apparatus comprises one or more of the following: a capability of controlling opening or closing of a charging port cover, a charging speed, and a payment manner.

15. The apparatus according to any one of claims 12 to 14, wherein
the transceiver unit is further configured to receive a positioning message sent by the charging apparatus, wherein the positioning message indicates a position of a charging connector, and the charging apparatus comprises the charging connector; and
the processing unit is further configured to control, based on the positioning message, the charging port cover of a vehicle to be opened.

16. The apparatus according to claim 15, wherein
the processing unit is specifically configured to: determine a distance between the vehicle and the charging connector based on the positioning message; and
when the distance is less than or equal to a first threshold, control the charging port cover to be opened.

17. The apparatus according to claim 16, wherein
the processing unit is specifically configured to: when duration in which the distance is less than or equal to the first threshold is greater than or equal to first duration, control the charging port cover to be opened.

18. The apparatus according to claims 15 to 17, wherein
the processing unit is further configured to: when it is not detected, within second duration, that the charging connector is inserted into a charging port, control the charging port cover to be closed.

19. The apparatus according to any one of claims 12 to 18, wherein
the transceiver unit is specifically configured to: when a distance between the vehicle and the charging apparatus is less than or equal to a preset distance, receive the connection broadcast that is based on the identification information.

20. A communication apparatus, wherein the apparatus comprises a transceiver unit, and the transceiver unit is configured to:
receive a second message sent by a cloud server, wherein the second message indicates that the cloud server successfully verifies identification information, and the identification information is determined based on vehicle recognition information; and
send a connection broadcast that is based on the identification information.

21. The apparatus according to claim 20, wherein
the transceiver unit is further configured to:
send a first message to the vehicle, wherein the first message indicates a type of the charging apparatus and/or a service provided by the charging apparatus;
receive the identification information sent by the vehicle; and
send the identification information to the cloud server.

22. The apparatus according to claim 21, wherein the service provided by the charging apparatus comprises one or more of the following: a capability of controlling opening or closing of a charging port cover, a charging speed, and a payment manner.

23. A communication apparatus, comprising at least one processor and a memory, wherein the at least one processor is coupled to the memory, and is configured to read and execute instructions in the memory, to perform the method according to any one of claims 1 to 11.

24. A computer-readable medium, wherein the computer-readable medium stores program code, and when the computer program code is run on a computer, the computer is enabled to perform the method according to any one of claims 1 to 11.

25. A chip, comprising at least one processor and a memory, wherein the at least one processor is coupled to the memory, and is configured to read and execute instructions in the memory, to perform the method according to any one of claims 1 to 11.

26. A vehicle comprising the apparatus according to any one of claims 12 to 23.
